Europäisches Patentamt

European Patent Office

Office européen des brevets

(19)

(11) **EP 1 643 434 A1**

(12) **EUROPEAN PATENT APPLICATION**

(43) Date of publication:
**05.04.2006 Bulletin 2006/14**

(51) Int Cl.:
***G06Q 10/00*** (2006.01)

(21) Application number: **05109092.6**

(22) Date of filing: **30.09.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Vasi, Gary L.**<br> **MI 48083 (US)**<br>• **Foerster, Stefan**<br> **68766 Hockenheim (DE)**<br>• **Czach, Michael**<br> **MI 48187 (US)** |
| (30) Priority: **30.09.2004 US 953526** | (74) Representative: **Schneider, Günther Martin et al**<br>**Bettinger Schneider Schramm,**<br>**Patent- und Rechtsanwälte,**<br>**Postfach 86 02 67**<br>**81629 München (DE)** |
| (71) Applicant: **SAP AG**<br> **69190 Walldorf (DE)** | |
| (72) Inventors:<br>• **Wilking, Michael**<br> **74889 Sinsheim (DE)** | |

(54) **Systems and methods for distributed resource management**

(57) Systems and methods for distributed resource management are provided. The systems and methods may simulate a plurality of supply schedules for a family of parts, compare the plurality of supply schedules, and store a supply schedule selected from the plurality of supply schedules. Each supply schedule may be respectively associated with a period of time reflecting a desired supply level for the parts.

FIG. 2

**Description**

BACKGROUND

I. Technical Field

The present invention generally relates to systems and methods for distributed resource management. More particularly, the invention relates to resource management systems and methods for reducing the cost of ordering and stocking resources, such as parts in a family of parts.

II. Background and Material Information

In today's business world, with global competition running rampant and consumer expectations ever-increasing, the efficient operation of a business enterprise is becoming more important than ever. No longer will consumers accept goods and services at just a fair price. They want them at the absolutely lowest price, and in addition demand them immediately. Hence, many businesses use distribution resource planning to control and optimize their cost.

Distribution resource planning is a set of approaches and processes for organizing a distribution network, so that resources, such as parts and supplies, are provided at the right quantities, to the right locations, at the right time, and at the right cost. A distribution network is a network of facilities and distribution options that provides resources for use, such as manufacturing or sale, in a business enterprise. Distribution networks exist both in manufacturing as well as in service organizations.

Currently, technology is available to help manage a business's distribution network. However, as the needs of a large and growing business increase, more is expected for the business to stay competitive and fewer costs and disruptions in the business's distribution network are tolerated. This is because any additional cost goes directly to the bottom line and can have extremely negative consequences on the business's market share, profitability, and, ultimately, survivability. Also, problems in the distribution network can have immense impact on the efficiency of the business, including creating delays or even complete stoppages of the business's production.

Accordingly, it would be beneficial to improve the management of distributed resources.

SUMMARY OF ASPECTS OF THE INVENTION

Features and principles consistent with the present invention may improve the management of distributed resources and, in particular, may reduce the cost of ordering and stocking resources, such as parts, in a distribution network.

One exemplary aspect of the invention relates to a method of managing resources. The method may comprise simulating a plurality of supply schedules for a family of parts, comparing the plurality of supply schedules according to respective costs for the plurality of supply schedules, and selecting a supply schedule from the plurality of supply schedules. Each supply schedule may be respectively associated with a period of time reflecting a desired supply level for the parts.

Another exemplary aspect of the invention relates to a method of selecting a supply schedule. The method may comprise determining costs for a plurality of supply schedules according to at least one storage factor, and selecting one of a plurality of supply schedules according to the determined costs.

Another exemplary aspect of the invention relates to a method of managing resources. The method may comprise simulating a plurality of supply schedules for a family of parts, comparing the plurality of supply schedules according to respective costs for the plurality of supply schedules, and storing a supply schedule selected from the plurality of supply schedules. Each supply schedule may be respectively associated with a period of time reflecting a desired supply level for the parts.

Another exemplary aspect of the invention relates to a resource management system. The system may comprise a processor and a memory configured to implement a method of managing resources or selecting supply schedules, consistent with embodiments of the invention.

Another exemplary aspect of the invention relates to a computer-readable medium comprising instructions to configure a system to manage resources or selecting supply schedules, consistent with embodiments of the invention.

Additional aspects of the invention are set forth in the detailed description which follows or may be learned by practice of methods, systems, and articles of manufacture consistent with the present invention. It is understood that both the foregoing general description and the following detailed description are exemplary and explanatory only and are not restrictive of the invention as claimed.

BRIEF DESCRIPTION OF THE DRAWINGS

The accompanying drawings, which are incorporated in and constitute a part of this specification, illustrate several aspects and embodiments of the invention and together with the description, serve to explain the principles of the invention. In the drawings:

FIG. 1 illustrates an exemplary distribution network, consistent with an embodiment of the present invention;

FIG. 2 illustrates an exemplary resource management system, consistent with an embodiment of the present invention;

FIG. 3 illustrates an exemplary method for managing resources, consistent with an embodiment of the present invention;

FIG. 4 illustrates an exemplary inventory level, consistent with an embodiment of the present invention;

FIGs. 5A and 5B illustrate exemplary supply schedules, consistent with an embodiment of the present invention;

FIG. 6A-6C illustrate another exemplary method for managing resources, consistent with an embodiment of the present invention; and

FIG. 7 illustrates exemplary inventory levels for a family of parts, consistent with an embodiment of the present invention.

DETAILED DESCRIPTION

Reference is now made in detail to exemplary aspects of the invention, examples and embodiments of which are illustrated in the accompanying drawings. Wherever possible, the same reference numbers are used throughout the drawings to refer to the same or like parts.

For the purposes of this application, the supply, production, and distribution of automotive parts are discussed. However, as one of ordinary skill in the art will appreciate, the principles of the present invention may be applied to the supply, production, and/or distribution of other resources, such as computer parts, television parts, tools, products, supplies, and other items of commerce. Accordingly, features and principles of the present invention are not limited to the management of automotive parts, but are equally applicable to other resources in the field of commerce. Further, the discussion below describes manufacturers acquiring supplies from suppliers over a distribution network. However, features and principles of the present invention apply equally to an enterprise ordering and receiving supplies from within its various internal departments or sources. Additionally, features and principles of the present invention apply equally to suppliers "pushing" supplies to a manufacturer according to a supply schedule that the supplier creates and maintains or having the manufacturer purchase (i.e., "pull") the supplies according to a supply schedule that the manufacturer creates and maintains.

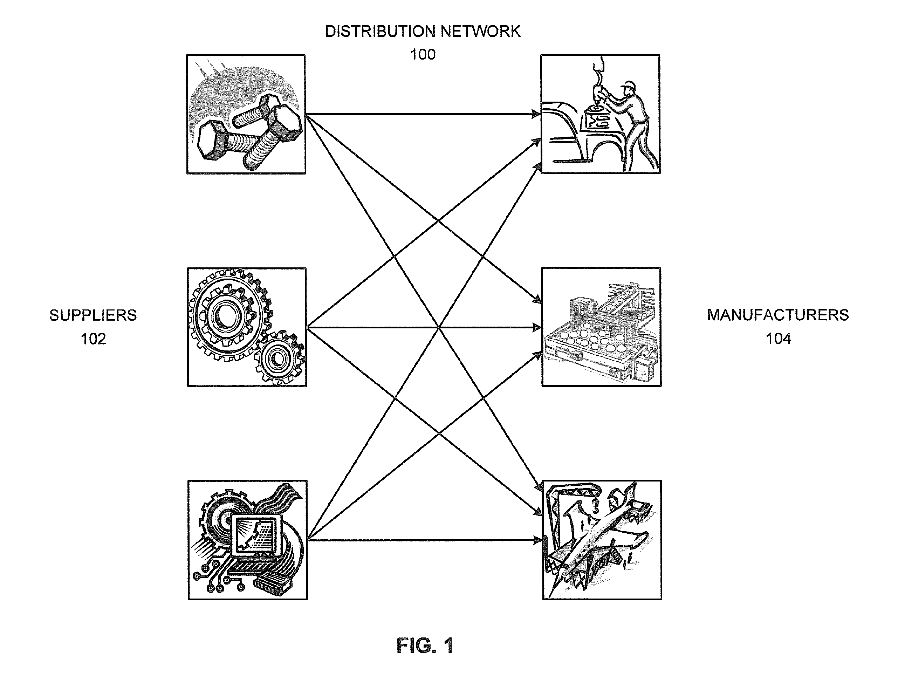

FIG. 1 illustrates an exemplary distribution network 100, consistent with an embodiment of the present invention. As shown in FIG. 1, distribution network 100 may include one or more suppliers 102 and manufacturers 104. Suppliers 102 may provide resources, such as parts or products, to manufacturers 104 via distribution network 100. Distribution network 100 may include a mail route, courier service, air freight provider, truck delivery service, warehouse, store room, and/or any other mechanism or facility used in transporting and maintaining resources between suppliers 102 and manufacturers 104.

Manufacturers 104 may require a regular supply of parts or products from suppliers 102 and may maintain a limited inventory of such supplies on hand. Some of the parts may be in the same family of parts. A family of parts is a group of resources that are related in terms of form, fit, or function, or may require the same or similar setup process by a supplier. For example, an automotive manufacturer may order and warehouse a two-month supply of two-inch bolts and three-inch bolts from its suppliers for its production line. At the end of every two months after its supply has depleted, it may order another two-month supply. Both sizes of bolts may be in the same family of parts because they require the same setup process at the supplier to produce. Hence, the supplier's setup cost, and thus the manufacturer's ordering cost, could be reduced if the automotive manufacturer tracked the supplies of both sizes of bolts and when necessary, replenished both of them at the same time.

The automotive manufacturer may further reduce cost by determining the optimal quantity of supplies that it should order each time it replenishes its supplies. This may minimize the number of orders, and thus the setup costs, that the manufacturer may need to pay over the long term.

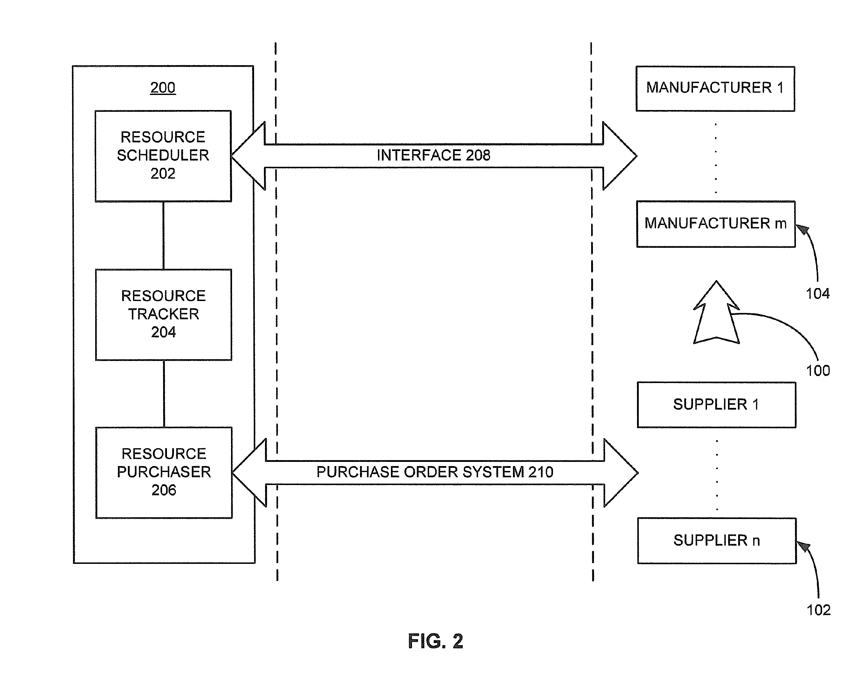

According to features and principles of the present invention, a resource management system may be used to manage a manufacturer's distributed resources. FIG. 2 illustrates an exemplary resource management system 200, consistent with an embodiment of the invention. System 200 may track the supplies of a family of parts and may replenish all of them at the same time to reduce cost. System 200 may also reduce cost by simulating and implementing a supply schedule that reduces ordering and storage costs.

System 200 may comprise a resource scheduler 202, a resource tracker 204, and a resource purchaser 206. Resource scheduler 202 may allow a manufacturer 104 to select a supply schedule for parts via interface 208. Interface 208 may include a user interface, a network interface, and/or any other mechanism for communicating between system 200 and manufacturers 104. Resource tracker 204 may track and manage a supply of a family of parts according to the selected supply schedule. Resource purchaser 206 may order, request, or purchase parts over purchase order system 210 according to the selected supply schedule. Purchase order system 210 may include an electronic or on-line communication system, a mail order system, a phone or customer service system and/or any other mechanism for ordering, requesting, or purchasing parts from supplier(s) 102. One or more suppliers 102 may send the parts to manufacturer 104 via distribution network 100 according to the orders, requests, or purchases.

Resource management system 200 may be implemented through any suitable combination of hardware, software, and/or firmware. For example, resource scheduler 202, resource tracker 204, and resource purchaser 206 may each include a mainframe, a laptop, a personal computer, a workstation, a computer chip, a digital signal processor board, an analog computer, a plurality of processors, and/or any other information processing device or combination of devices. Further, each of resource scheduler 202, resource tracker 204, and resource purchaser 206 may be implemented by a general purpose computer or data processor selectively activated or reconfigured by a stored computer program, or may be a specially constructed computing platform for carrying out the features and operations disclosed herein. Alternatively, resource scheduler 202, resource tracker 204, and resource purchaser 206 may be implemented on the same processor or computing platform in one of any of the above forms.

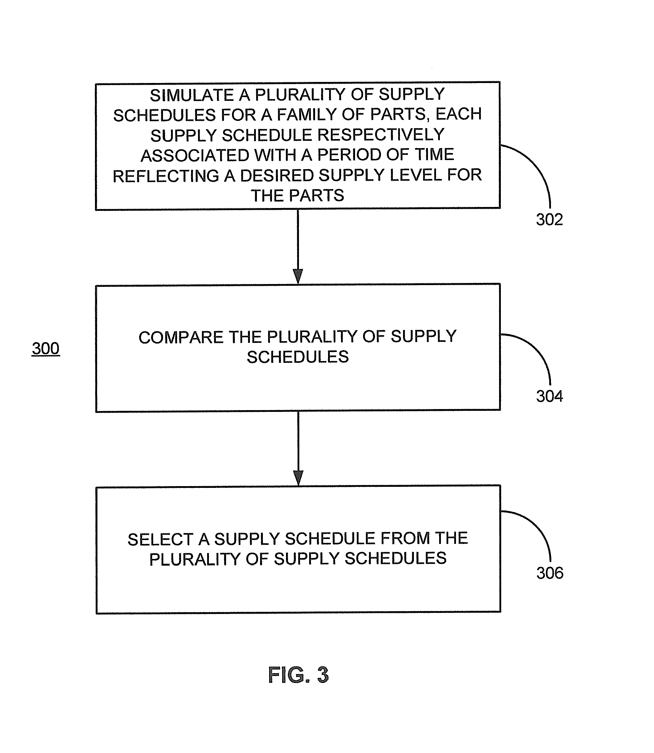

System 200 and its components may perform a method of managing resources, such as the exemplary method illustrated in FIG. 3. For example, resource scheduler 202 may simulate a plurality of supply schedules for a family of parts (block 302 in FIG. 3). Each supply schedule may be respectively associated with a period of time reflecting a desired supply level for the parts. The simulation may include determining an ordering cost and a storage or carrying cost for each supply schedule in the plurality of supply schedules based on the period of time associated with each supply schedule. The storage costs may include any costs associated with maintaining the desired supply level of parts over the period of time. The simulation may include determining an ordering cost and a storage cost for an N-month supply of all parts in the family of parts.

For example, resource scheduler 202 may simulate twelve supply schedules for a time horizon of twelve months. The twelve simulated supply schedules may respectively use twelve different time periods in increments of one-month intervals. The time period for the first simulated supply schedule may be one month. The time period for the second simulated supply schedule may be two months. The time period for the $N^{th}$ simulated supply schedule may be N months. For the first simulated supply schedule, resource scheduler 202 may estimate the ordering and storage costs involved in ordering and storing one month of parts in a family of parts every month. For the second simulated supply schedule, resource scheduler 202 may estimate the ordering and storage costs involved in ordering and storing two months of parts in a family of parts every two months. Similarly, for the $N^{th}$ simulated supply schedule, resource scheduler 202 may estimate the ordering and storage costs involved in ordering and storing N months of parts in a family of parts every N months.

For each simulated supply schedule, resource scheduler 202 may determine total ordering costs per year from a projected number of orders required for the year. For example, the first simulated supply schedule may replenish a manufacturer's supply of a family of parts every month. Hence, the first simulated supply schedule may require that twelve orders be placed every year. Similarly, the second simulated supply schedule may replenish a manufacturer's supply of a family of parts every two months. Hence, the second simulated supply schedule may require only six orders be placed every year, which reduces the total ordering cost, in terms of fix costs that suppliers will charge for setting up equipment to produce parts each time.

However, the total ordering cost does not include other costs, such as storage costs, associated with a given supply schedule. These other costs may be significant for evaluating a given supply schedule. For example, because the second simulated supply schedule maintains a larger supply of parts (i.e., two-month supply), the storage costs for the second simulated supply schedule may be higher than the storages costs for the first simulated supply schedule, which only maintains a one-month supply of parts. Therefore, storage costs in addition to ordering costs have to be addressed to evaluate a simulated supply schedule.

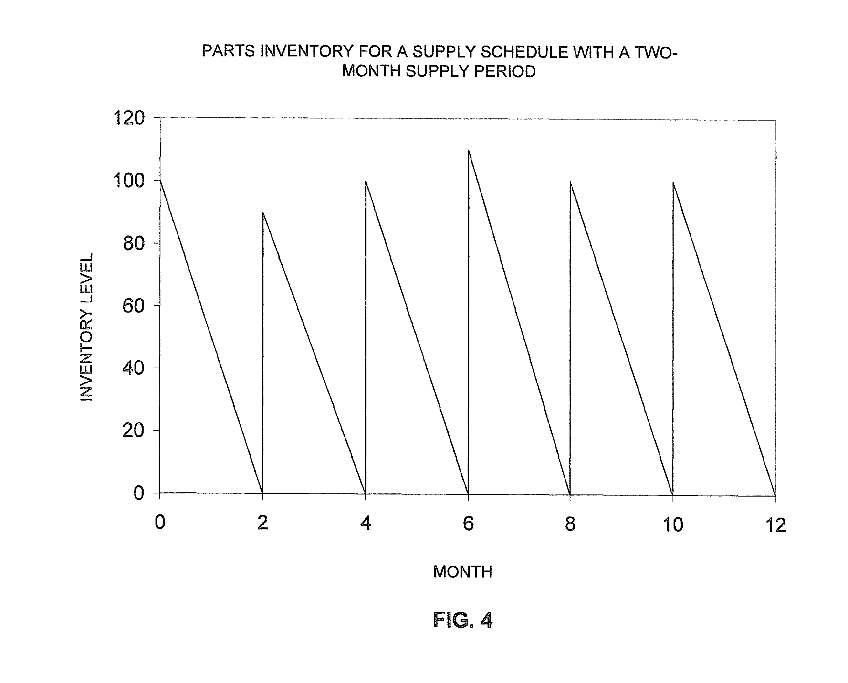

Resource scheduler 202 may determine the total storage costs per year for each simulated supply schedule. Resource scheduler 202 may determine the total storage costs from the quantities of supplies ordered and stored over the period of time associated with each supply schedule. For example, FIG. 4 illustrates exemplary inventory levels of a manufacturer's parts inventory for a supply schedule that maintains a two-month supply of a family of parts. The inventory is replenished every two months, as illustrated by the jump and decrease in inventory levels every two months. The inventory levels will vary for different supply schedules, and hence, the total costs for storing or carrying the inventory will also vary.

In particular, the total storage cost per year may be a function of the inventory levels throughout the year. The inventory levels may vary over supply periods (e.g., two months for two-month supply schedules, three months for three-month supply schedule, etc.) throughout the year. Resource scheduler 202 may approximate the storage cost over such periods by applying a storage cost factor to the inventory levels over the supply periods. The storage cost factor may reflect the cost associated with storing the parts over the supply periods.

For example, the storage cost factor may be a percentage of the cost of the parts. The instantaneous storage cost for a quantity of parts may then be given by the storage factor multiplied by the cost of the parts times the quantity of the parts. Assuming that the quantity of parts diminishes linearly over time, the storage cost over a supply period would be the sum of the initial instantaneous storage costs at the beginning and the end of the period divided by two and multiplied by the length of the period. If the instantaneous storage cost at the end of the period is zero (because the quantity of parts should generally diminish to zero by the end of a supply period), then the storage cost over the supply period simplifies to the initial instantaneous storage cost at the beginning of the period divided by two. The total storage cost per year would then be the sum of the storage costs for each supply period in the year.

By way of illustration, the storage cost $S_{p,i}$ for a part p over an $i^{th}$ supply period in a supply schedule may be determined by:

$$s_{p,i} = q_{p,i} c_p \frac{f_p}{2} T$$

where $q_{p,i}$ is the quantity of part p purchased in period $i$, $c_p$ is the cost of part $p$, $f_P$ is the storage cost factor for part p, and Tis a period of time. In one embodiment, T may be the length of the supply period or the length of the supply period divided by twelve. The total storage cost per year for part p may then be given by:

$$s_p = \sum_{i=1}^{M} s_{p,i}$$

where M is the number of periods over a year. The total storage cost per year $s_{total}$ for the family of parts comprising part p may then be determined by:

$$s_{total} = \sum_{p=1}^{F} s_p$$

where Fis the number parts in the family of parts for part p. The total annual cost for a simulated supply schedule may then be given by the sum of the total ordering costs per year and the total storage costs per year.

Resource scheduler 202 (FIG. 2) may compare a plurality of simulated supply schedules (block 304 of FIG. 3). Resource schedule 202 may evaluate the costs (e.g., ordering costs, storage costs, annual costs, etc.) associated with each simulated supply schedule and select one of the supply schedules for automatic ordering or implementation. Alternatively, resource scheduler 202 may present a comparison of the plurality of supply schedules and receive a selection for a supply schedule from the plurality of supply schedules. For example, resource scheduler 202 may display a comparison of supply schedules to manufacturer 104 and receive a selection for one of the supply schedules via interface 208 (FIG. 2).

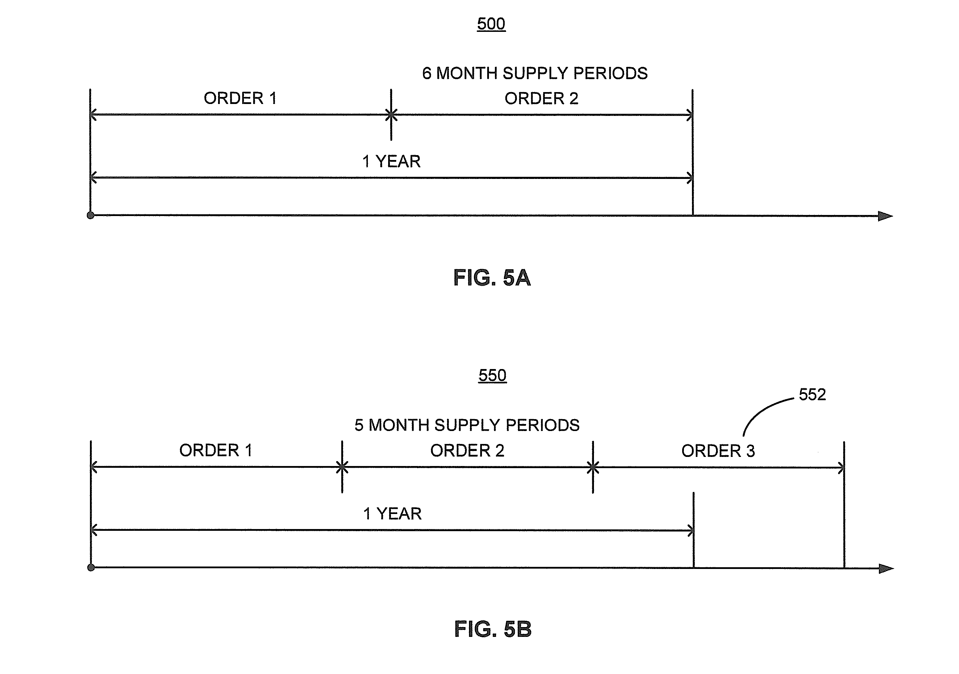

In order to accurately compare two supply schedules with differing supply periods, such as a five-month supply period versus a six-month supply period, resource scheduler 202 may generate normalized total costs for a supply schedule. For example, FIGs. 5A and 5B illustrate two exemplary supply schedules 500 and 550 with differing supply periods. Supply schedule 500 orders parts every six months, whereas supply schedule 550 orders parts every five months. The third order of parts 552 in supply schedule 550 runs over to the following year. Resource scheduler 202 may normalize costs for supply schedule 550 by multiplying the storage cost of the third order with a factor corresponding to the portion that the third order period is in the considered year. In this case, the factor would be two-fifths because two of the five months in the third order period are in the considered year. Hence, the total storage costs per year for supply schedule 550 would be given by the sum of the storage costs for the first and second order periods plus two-fifths of the storage costs for the third order period.

Further, resource scheduler 202 may also normalize costs for supply schedule 550 by multiplying the total ordering costs per year by a factor corresponding to the portion that the supplied time is in the considered year. In this case, the factor would be 12/15 because twelve of the fifteen months are in the considered year. Hence, the total ordering costs per year for supply schedule 550 would be given by twelve-fifteenths of the sum of the ordering costs for the first, second, and third order periods. Resource scheduler 202 may then sum the total ordering costs per year with total storage costs per year for supply schedule 550 to provide a normalized total cost per year, which may be compared with the total cost per year of supply schedule 500.

After resource scheduler 202 (FIG. 2) compares a plurality of supply schedules, it may select a supply schedule from the plurality of supply schedules according to the comparison (block 306 of FIG. 3). As discussed above, the resource scheduler 202 may make the selection itself or may receive the selection from a system operator or some other entity. In the later case, output from the preceding steps may be provided for human intervention or analysis.

Resource tracker 204 may manage a family of parts according to the selected supply schedule. Resource tracker 204 may keep an inventory of the parts and track their usage. When resource tracker 204 determines that a supply of parts have to be replenished, it may have resource purchaser 206 order, request, or purchase parts in the family of parts according to the selected supply schedule.

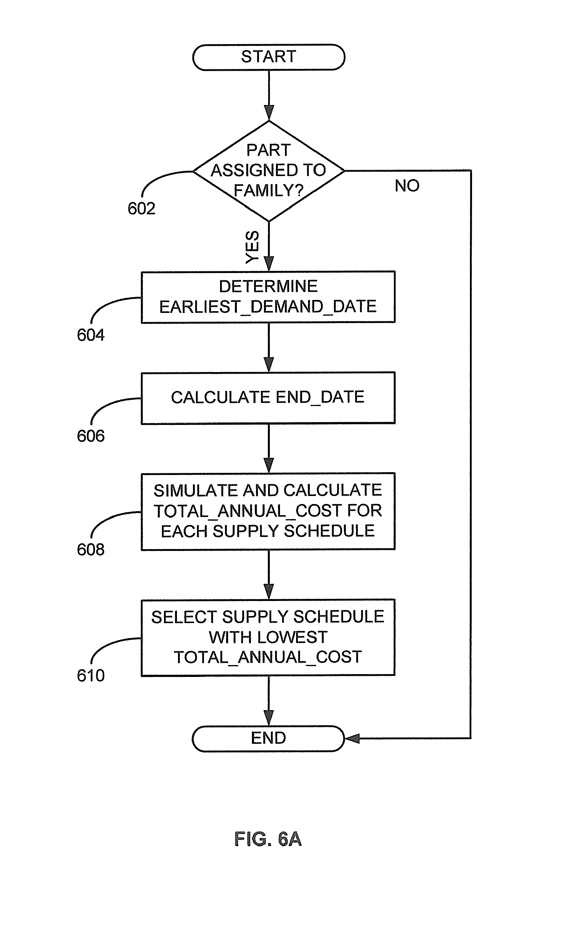

Consistent with the present invention, system 200 (FIG. 2) and its components may be implemented to perform other methods, such as the exemplary method for managing resources illustrated in FIGs. 6A-6C. System 200 may create a distributed resource planning (DRP) matrix to plan and track the distribution of parts in an organization or entity. A DRP matrix is a data structure to store data that is relevant to a DRP calculation. The row headers of a DRP matrix may include data elements corresponding to items, such as "independent demand forecast," "distribution demand," "material in transit," "available inventory," "supply shortage," "time phase availability," etc. The column headers of a DRP matrix may include time buckets of any size, typically days. The body of the DRP matrix may contain information for each respective row header and column header. System 200 may prepare one or more DRP matrices prior to performing the method for managing resources shown in FIGs. 6A-6C. System 200 may use information from the DRP matrices to perform calculations needed to manage resources. Every part and part location combination may have its own DRP matrix.

As shown in FIG. 6A, for every part, resource scheduler 202 may check to see whether the part is assigned to a family of parts (block 602). If the part is not assigned to a family of parts, then resource scheduler 202 may stop evaluating the part for supplying in a family. If the part is assigned to a family of parts, then resource scheduler 202 may examine the parts in the family of parts to determine an EARLIEST_DEMAND_DATE (block 604). The EARLIEST_ DEMAND_DATE is the date of the part with the earliest need for (re)supply in the family of parts and may be the first ordering date for the parts in the family of parts. Resource scheduler 202 may also calculate an END_DATE, which may be one year or another suitable period after the EARLIEST _DEMAND_DATE (block 606). Resource scheduler 202 may simulate supply schedules for the family of parts and calculate a TOTAL_ANNUAL_COST for each supply schedule (block 608). Resource scheduler 202 may select the supply schedule with the lowest TOTAL_ANNUAL_COST for the family of parts (block 610).

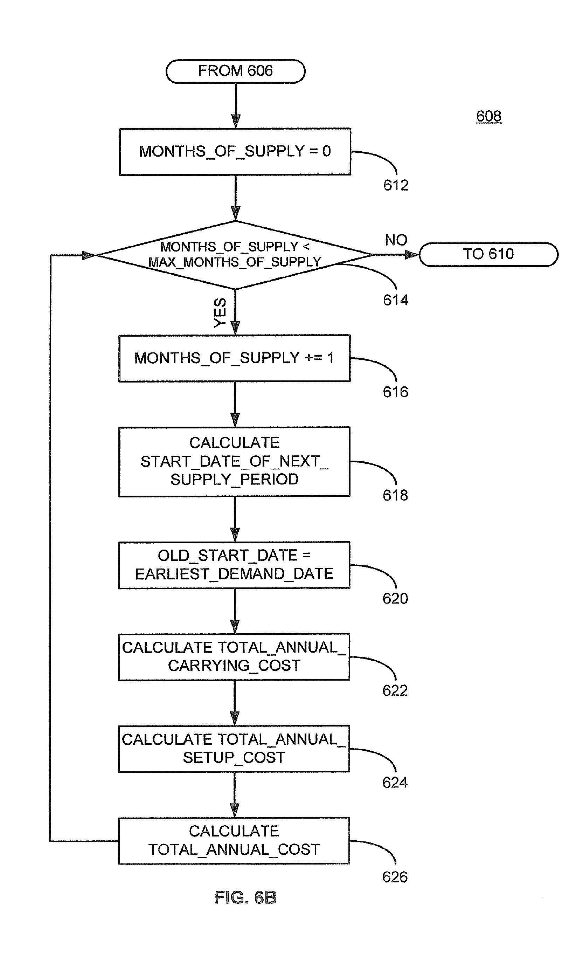

When simulating and calculating the TOTAL_ANNUAL_COST for each supply schedule in a plurality of potential supply schedules (block 608), resource scheduler 202 may execute the exemplary method of FIG. 6B to calculate the TOTAL_ANNUAL_COSTs for N supply schedules with one- to N-month supply periods, respectively. In particular, resource scheduler 202 may initialize a MONTHS_OF _SUPPLY to zero (block 612). Resource scheduler 202 may check whether MONTHS_OF _SUPPLY is greater than a MAX_MONTHS_OF _SUPPLY (block 614). If the MONTHS_ OF_SUPPLY is greater than the MAX_MONTHS_OF _SUPPLY, then resource scheduler 202 has completed calculating the TOTAL_ANNUAL_COSTs for supply schedules with supply periods from one- to N-months, respectively.

If the MONTHS_OF _SUPPLY is not greater than the MAX_MONTHS_OF _SUPPLY, then resource scheduler 202 may proceed to increment the MONTHS_OF _SUPPLY by one (block 616) and determine the TOTAL_ANNUAL_ COST for a supply schedule with a supply period equal to the present value of the MONTHS_OF _SUPPLY. Resource scheduler 202 may calculate the START_DATE_OF_NEXT_SUPPLY_PERIOD from the EARLIEST_DEMAND_DATE (block 618) and may do so by, for example, summing the MONTHS_OF_SUPPLY with the EARLIEST_DEMAND_DATE. Resource scheduler 202 may then save the EARLIEST_ DEMAND_DATE by setting an OLD_START_DATE equal to the EARLIEST_DEMAND_DATE (block 620). Resource scheduler 202 may calculate a TOTAL_ANNUAL_CARRYING_ COST (block 622) and a TOTAL_ANNUAL_ORDERING_COST (block 624) for the supply schedule with a supply period equal to the present value of the MONTHS_OF _SUPPLY. Finally, resource scheduler 202 may calculate the TOTAL_ ANNUAL_COST for the supply schedule with a supply period equal to the present value of the MONTHS_OF _SUPPLY and may do so, for example, by summing the TOTAL_ANNUAL_CARRYING_COST with the TOTAL_ANNUAL_ ORDERING_COST. Resource scheduler 202 may continue calculating the TOTAL_ANNUAL_COSTs for various supply schedules with supply periods equal to different values for the MONTHS_OF _SUPPLY, until resource scheduler 202 calculates all of the TOTAL_ANNUAL_COSTs for supply periods from one- to N-months, respectively.

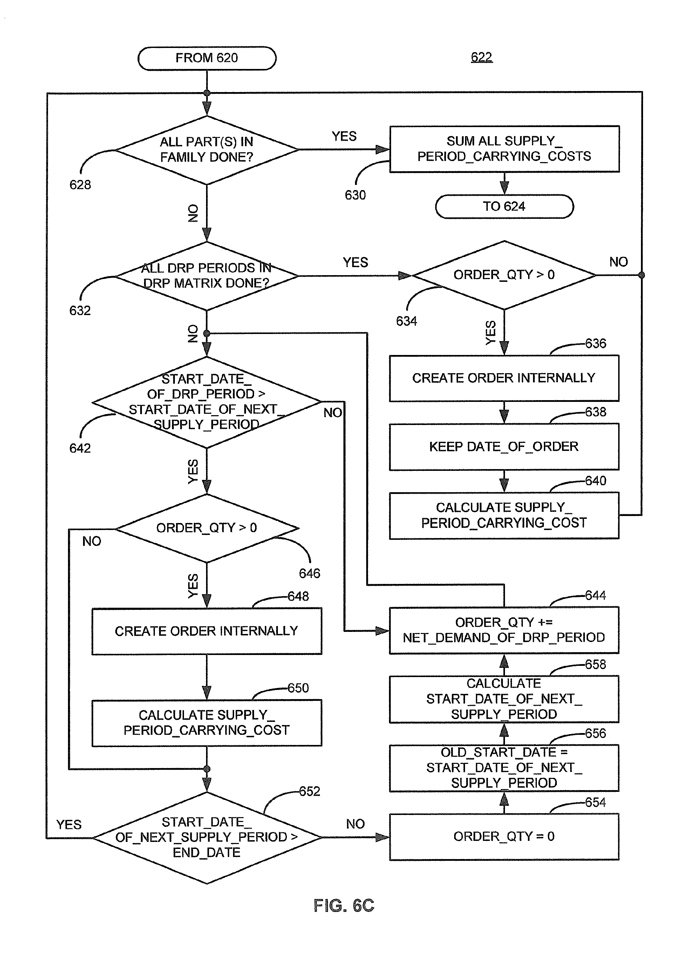

When calculating the TOTAL_ANNUAL_CARRYING_COST for a supply schedule with a supply period equal to the present value of the MONTHS_OF _SUPPLY (block 622), resource scheduler 202 may execute the exemplary method of FIG. 6C to determine the carrying costs for all parts in a family of parts over each separate supply period in one year. Resource scheduler 202 may begin by checking whether the carrying costs for each part in the family over each supply period in one year, represented by SUPPLY_PERIOD_CARRYING_COSTS, has been calculated (block 628). If the SUPPLY_PERIOD_CARRYING_COSTS have been calculated, then resource scheduler 202 sums all of the SUPPLY PERIOD CARRYING COSTs to yield the TOTAL ANNUAL CARRYING COST for a given supply schedule of a family of parts at the present value for the MONTHS_OF_SUPPLY (block 630).

If the SUPPLY PERIOD CARRYING COSTs for all parts in the family have not been calculated, then resource scheduler 202 may divide the year into DRP timer periods to calculate SUPPLY _PERIOD_CARRYING_COSTs. DRP time periods are usually days, but may be any other length of time, such as weeks and months. DRP time periods may be the time periods associated with the column headers of a DRP matrix, as previously described. Resource scheduler 202 may check whether all DRP periods within a given time horizon for a DRP matrix have been examined for carrying costs of a part. If all of the DRP periods have been examined (block 632), then resource scheduler 202 may check to see whether a ORDER_QTY for the part is greater than zero over a supply period (block 634). If the ORDER_QTY is not greater than zero, then supplies for that part do not need to be ordered over the supply period. If the ORDER_QTY is greater than zero, then resource scheduler 202 may create an order internally for the parts to meet the ORDER_QTY (block 636), keep the order date as a DATE_OF_ORDER (block 638), and calculate the SUPPLY_PERIOD_CARRYING_ COST for the present part in the family at the present supply period in question (block 640). An internal order is a simulated order that is not actually published or executed. Once a decision is made on which of the simulated supply schedules is best, then the internal orders may be published and/or executed.

If all of the DRP periods have not been evaluated (block 632), then resource scheduler 202 may check a START_DATE_OF _DRP _PERIOD against a START_DATE_OF _NEXT_SUPPLY_PERIOD (block 642). If the START_DATE_OF _DRP _PERIOD is not greater than the START_DATE_OF _NEXT_SUPPLY_PERIOD, then resource scheduler 202 may increment the ORDER_QTY by the net demand for the part in the DRP period, which is represented by NET _DEMAND_OF _DRP _PERIOD (block 644). The NET _DEMAND_OF _DRP _PERIOD is zero if the inventory for the part is sufficient to cover the demand in the DRP_PERIOD. If the START_DATE_OF_DRP_PERIOD is greater than the START_DATE OF_NEXT SUPPLY PERIOD, then resource scheduler 202 may check whether the ORDER_QTY is greater than zero (block 646). If ORDER_QTY is greater than zero, resource scheduler 202 may create an order internally for the parts to meet ORDER_QTY (block 648) and calculate the SUPPLY_PERIOD_CARRYING_ COST for the present part in the family at the present supply period in question (block 650).

Resource scheduler 202 may check whether the START_DATE_OF _NEXT_SUPPLY_PERIOD is greater than the END_DATE (block 652). If the START_DATE_OF _NEXT_SUPPLY_PERIOD is greater than the END_DATE, then the resource scheduler 202 has finished calculating SUPPLY_PERIOD_CARRYING_COSTS for the present part over the course of a year and may move to the next part in the family.

If the START _DATE_OF _NEXT _SUPPLY_PERIOD is not greater than the END_DATE, then resource scheduler 202 may calculate SUPPLY_PERIOD_CARRYING_COST for the present part in the next supply period. Particularly, resource scheduler 202 may set ORDER_QTY to zero (block 654), set the OLD_START_DATE to the current START_DATE_OF _NEXT_SUPPLY_PERIOD (block 656), calculate the next START _DATE_OF _NEXT _SUPPLY_PERIOD (block 658), and increment the ORDER_QTY by NET_DEMAND_OF _DRP _PERIOD (block 644). Resource scheduler 202 may repeat the steps in blocks 642 to 658 until the START_DATE_OF _NEXT_SUPPLY_ PERIOD is greater than the END_DATE, at which point, resource scheduler 202 may move on to calculating the SUPPLY_ PERIOD_CARRYING_COSTS for the next part in the family (block 628).

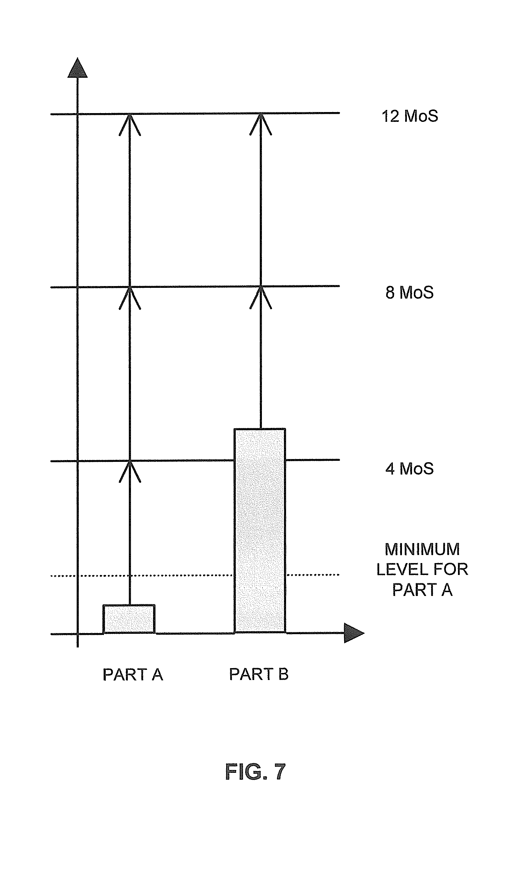

Consistent with the present invention, FIG. 7 illustrates exemplary inventory levels for parts in a family of parts. The family includes part A and part B. The selected supply schedule has a supply period of four months, as illustrated in FIG. 7 and Table 1 below. Consistent with an embodiment of the present invention, the inventory levels may be tracked and resupplied according to the selected supply schedule. For example, part A triggers a family buy of parts because it is below a minimum level on day S, which is the earliest demand date. There is a demand for four units of part A in the first supply period, and the inventory level for part A is 1 unit. Hence, there is a net demand for three units of part A.

Resource purchaser 206 may create an order quantity of three units for part A and creates no orders for part B during the first four months because it doesn't need to order for part B as long as the inventory level for part B meets the demand over the first four-month supply period. At the beginning of the second four-month supply period, resource tracker 204 detects that the inventory levels for parts A and B do not meet the demand required for the next four months. Hence, resource purchaser 206 creates an order quantity of five units for each of parts A and B to meet the demand for five and eight units, respectively, for the next four months. At the beginning of the third four-month supply period, resource tracker 204 detects that the inventory levels for parts A and B again do not meet the demand required for the next four months. Hence, resource purchaser 206 creates an order quantity of three and four units for parts A and B to meet the demand for three and four units, respectively, for the next four months.

Resource tracker 204 and resource purchaser 206 may repeat this process every four months as shown in the table below. At such times, resource scheduler 202 may simulate and apply a new supply schedule if the old supply schedule is no longer optimal.

TABLE 1

|  | Part A | Part B |
|---|---|---|
| Time phase availability | 1 | 9 |
| Minimum level | 2 | 4 |
| Demand over 1st four months of supply (MoS) | 4 | 6 |
| Demand over 2nd four MoS | 5 | 8 |
| Demand over 3rd four MoS | 3 | 4 |
| Order for 1st four months | 4 - 1 = 3 | no order |
| Order for 2nd four months | 5 | 8 - (9 - 6) = 5 |
| Order for 3rd four months | 3 | 4 |

One of ordinary skill in the art will appreciate that features and principles of the present invention may be implemented in a computer readable medium (e.g., floppy disk, CD-ROM, storage device, etc.) containing instructions for a system, such as resource management system 200, to execute the instructions.

The embodiments and aspects of the invention set forth above are only exemplary and explanatory. They are not restrictive of the invention as claimed. Other embodiments consistent with features and principles are included in the scope of the present invention.

In the foregoing description, various features are grouped together for purposes of streamlining the disclosure. This method of disclosure is not to be interpreted as reflecting an intention that the claimed invention requires more features than are expressly recited in each claim. Rather, as the following claims reflect, inventive aspects may lie in fewer than all features of a single foregoing disclosed embodiment. Thus, the following claims are hereby incorporated into this description, with each claim standing on its own as a separate embodiment of the invention.

Other embodiments of the invention will be apparent to those skilled in the art from consideration of the specification and practice of the invention disclosed herein. Therefore, it is intended that the specification and examples be considered as exemplary only, with a true scope and spirit of the invention being indicated by the following claims

**Claims**

1. A method of managing resources, comprising:

   simulating a plurality of supply schedules for a family of parts, each supply schedule respectively associated with a period of time reflecting a desired supply level for the parts;
   comparing the plurality of supply schedules according to respective costs of the plurality of supply schedules; and
   selecting a supply schedule from the plurality of supply schedules.

2. The method of claim 1, wherein simulating comprises determining an ordering cost and a storage cost for each supply schedule in the plurality of supply schedules based on the period of time associated with each supply schedule.

3. The method of claim 1, wherein simulating comprises determining the costs using at least one storage cost factor for at least one part in the family of parts.

4. The method of claim 1, wherein simulating comprises determining a total storage cost $s_{total}$ according to

$$s_{total} = \sum_{p=1}^{F} \sum_{i=1}^{M} q_{p,i} c_p \frac{f_p}{2} T$$ , wherein $q_i$ is a quantity of parts purchased in period $i$, $c_p$ is a cost of a part $p$ in the family of parts, $fp$ is a storage cost factor for the part $p$, $T$ is the period of time, $M$ is a number of the periods of time over a time span, and $F$ is a number of parts in the family of parts.

5. The method of claim 1, wherein simulating comprises determining an ordering cost and a storage cost for an N-month supply of parts in the family of parts, and wherein N is a positive integer.

6. The method of claim 1, wherein comparing comprises generating a normalized total cost for each supply schedule in the plurality of supply schedules.

7. The method of claim 1, wherein comparing comprises:

   presenting a comparison of the plurality of supply schedules; and
   receiving a selection for a supply schedule from the plurality of supply schedules.

8. The method of claim 1, further comprising managing a supply of the parts according to the selected supply schedule.

9. The method of claim 8, wherein managing comprises maintaining the desired supply level of the parts in the family of parts according to the selected supply schedule.

10. The method of claim 8, wherein managing comprises replenishing the supply of all parts in the family of parts when the supply of any part in the family of parts does not meet the desired supply level according to the selected supply schedule.

11. A resource management system, comprising:

    a processor; and
    a memory,
    wherein the processor and memory are configured to perform a method comprising:

       simulating a plurality of supply schedules for a family of parts, each supply schedule respectively associated with a period of time reflecting a desired supply level for the parts;
       comparing the plurality of supply schedules according to respective costs of the plurality of supply schedules; and
       selecting a supply schedule from the plurality of supply schedules.

12. The system of claim 11, wherein simulating comprises determining an ordering cost and a storage cost for each supply schedule in the plurality of supply schedules based on the period of time associated with each supply schedule.

13. The system of claim 11, wherein simulating comprises determining the costs using at least one storage cost factor for at least one part in the family of parts.

14. The system of claim 11, wherein simulating comprises determining a total storage cost $S_{total}$ according to

$$S_{total} = \sum_{p=1}^{F} \sum_{i=1}^{M} q_{p,i} c_p \frac{f_p}{2} T \,,$$ wherein $q_i$ is a quantity of parts purchased in period $i$, $Cp$ is a cost of a part $p$ in the family of parts, $fp$ is a storage cost factor for the part $p$, $T$ is the period of time, $M$ is a number of the periods of time over a time span, and $F$ is a number of parts in the family of parts.

15. The system of claim 11, wherein simulating comprises determining an ordering cost and a storage cost for an N-month supply of parts in the family of parts, and wherein N is a positive integer.

16. The system of claim 11, wherein comparing comprises generating a normalized total cost for each supply schedule in the plurality of supply schedules.

17. The system of claim 11, wherein comparing comprises:

    presenting a comparison of the plurality of supply schedules; and
    receiving a selection for a supply schedule from the plurality of supply schedules.

18. The system of claim 11, wherein the method further comprises managing a supply of the parts according to the selected supply schedule.

19. The system of claim 18, wherein managing comprises maintaining the desired supply level of the parts in the family of parts according to the selected supply schedule.

20. The system of claim 18, wherein managing comprises replenishing the supply of all parts in the family of parts when the supply of any part in the family of parts does not meet the desired supply level according to the selected supply schedule.

21. A computer-readable medium containing instructions to configure a system to perform a method of managing resources, the method comprising:

simulating a plurality of supply schedules for a family of parts, each supply schedule respectively associated with a period of time reflecting a desired supply level for the parts;
comparing the plurality of supply schedules according to respective costs of the plurality of supply schedules; and
selecting a supply schedule from the plurality of supply schedules.

22. The computer-readable medium of claim 21, wherein simulating comprises determining an ordering cost and a storage cost for each supply schedule in the plurality of supply schedules based on the period of time associated with each supply schedule.

23. The method of claim 21, wherein simulating comprises determining the costs using at least one storage cost factor for at least one part in the family of parts.

24. The method of claim 21, wherein simulating comprises determining a total storage cost $S_{total}$ according to

$$S_{total} = \sum_{p=1}^{F} \sum_{i=1}^{M} q_{p,i} c_p \frac{f_p}{2} T$$ , wherein $q_i$ is a quantity of parts purchased in period $i$, $C_p$ is a cost of a part $p$ in the family of parts, $fp$ is a storage cost factor for the part $p$, $T$ is the period of time, $M$ is a number of the periods of time over a time span, and $F$ is a number of parts in the family of parts.

25. The computer-readable medium of claim 21, wherein simulating comprises determining an ordering cost and a storage cost for an N-month supply of parts in the family of parts, and wherein N is a positive integer.

26. The computer-readable medium of claim 21, wherein comparing comprises generating a normalized total cost for each supply schedule in the plurality of supply schedules.

27. The computer-readable medium of claim 21, wherein comparing comprises:

presenting a comparison of the plurality of supply schedules; and
receiving a selection for a supply schedule from the plurality of supply schedules.

28. The computer-readable medium of claim 21, wherein the method further comprises managing a supply of the parts according to the selected supply schedule.

29. The computer-readable medium of claim 28, wherein managing comprises maintaining the desired supply level of the parts in the family of parts according to the selected supply schedule.

30. The computer-readable medium of claim 28, wherein managing comprises replenishing the supply of all parts in the family of parts when the supply of any part in the family of parts does not meet the desired supply level according to the selected supply schedule.

31. A resource management system, comprising:

means for simulating a plurality of supply schedules for a family of parts, each supply schedule respectively associated with a period of time reflecting a desired supply level for the parts;
means for comparing the plurality of supply schedules according to respective costs of the plurality of supply schedules; and
means for selecting a supply schedule from the plurality of supply schedules.

**32.** A method for selecting a supply schedule, comprising:

> determining costs for a plurality of supply schedules according to at least one storage factor; and
> selecting one of a plurality of supply schedules according to the determined costs.

**33.** The method of claim 32, wherein selecting one of the plurality of supply schedules comprises selecting one of the plurality of supply schedules according to a lowest of the determined cost.

**34.** A method of managing resources, comprising:

> simulating a plurality of supply schedules for a family of parts, each supply schedule respectively associated with a period of time reflecting a desired supply level for the parts;
> comparing the plurality of supply schedules according to respective costs for the plurality of supply schedules; and
> storing a supply schedule selected from the plurality of supply schedules.

MANUFACTURERS
104

DISTRIBUTION NETWORK
100

SUPPLIERS
102

FIG. 1

MANUFACTURER 1

MANUFACTURER m — 104

100

SUPPLIER 1

SUPPLIER n — 102

INTERFACE 208

PURCHASE ORDER SYSTEM 210

200

RESOURCE SCHEDULER 202

RESOURCE TRACKER 204

RESOURCE PURCHASER 206

FIG. 2

SIMULATE A PLURALITY OF SUPPLY
SCHEDULES FOR A FAMILY OF PARTS, EACH
SUPPLY SCHEDULE RESPECTIVELY
ASSOCIATED WITH A PERIOD OF TIME
REFLECTING A DESIRED SUPPLY LEVEL FOR
THE PARTS

302

300

COMPARE THE PLURALITY OF SUPPLY
SCHEDULES

304

SELECT A SUPPLY SCHEDULE FROM THE
PLURALITY OF SUPPLY SCHEDULES

306

FIG. 3

PARTS INVENTORY FOR A SUPPLY SCHEDULE WITH A TWO-
MONTH SUPPLY PERIOD

MONTH

FIG. 4

EP 1 643 434 A1

500

6 MONTH SUPPLY PERIODS

| ORDER 1 | ORDER 2 |

1 YEAR

## FIG. 5A

550

552

5 MONTH SUPPLY PERIODS

| ORDER 1 | ORDER 2 | ORDER 3 |

1 YEAR

## FIG. 5B

FIG. 6A

FROM 606

608

MONTHS_OF_SUPPLY = 0

612

MONTHS_OF_SUPPLY <
MAX_MONTHS_OF_SUPPLY

NO → TO 610

614

YES

MONTHS_OF_SUPPLY += 1

616

CALCULATE
START_DATE_OF_NEXT_
SUPPLY_PERIOD

618

OLD_START_DATE =
EARLIEST_DEMAND_DATE

620

CALCULATE TOTAL_ANNUAL_
CARRYING_COST

622

CALCULATE TOTAL_ANNUAL_
SETUP_COST

624

CALCULATE
TOTAL_ANNUAL_COST

626

FIG. 6B

FROM 620                                622

628  ALL PART(S) IN FAMILY DONE? —YES→  SUM ALL SUPPLY_ PERIOD_CARRYING_COSTS
                                         630
                                              ↓
                                         TO 624

NO
↓

632  ALL DRP PERIODS IN DRP MATRIX DONE? —YES→  ORDER_QTY > 0 —NO→
                                                634
                                                     YES ↓ 636

NO
↓

642  START_DATE_ OF_DRP_PERIOD > START_DATE_OF_NEXT_ SUPPLY_PERIOD —NO→   CREATE ORDER INTERNALLY
                                                                         638
                                                                              ↓
                                                                         KEEP DATE_OF_ORDER
                                                                         640
YES                                                                           ↓
↓                                                                        CALCULATE SUPPLY_ PERIOD_CARRYING_COST

646  ORDER_QTY > 0  NO→
     YES ↓ 648

CREATE ORDER INTERNALLY  →  ORDER_QTY += NET_DEMAND_OF_DRP_PERIOD  644
           ↓ 650
                                         CALCULATE START_DATE_OF_NEXT_ SUPPLY_PERIOD  658
CALCULATE SUPPLY_ PERIOD_CARRYING_COST        ↑
           ↓                             OLD_START_DATE = START_DATE_OF_NEXT_ SUPPLY_PERIOD  656
                                              ↑
652  START_DATE_ OF_NEXT_SUPPLY_PERIOD > END_DATE —NO→  ORDER_QTY = 0  654

YES

**FIG. 6C**

19

12 MoS

8 MoS

4 MoS

MINIMUM
LEVEL FOR
PART A

PART A        PART B

FIG. 7

**European Patent Office**

**DECLARATION**

Application Number

which under Rule 45 of the European Patent Convention EP 05 10 9092
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (IPC)<br><br>G06F17/60 |
|---|---|
| The claims of the application are formulated to merely specify commonplace features relating to matter excluded from patentability under Art. 52(2) and (3) EPC and its technological implementation. Due to the attendant lack of resolution of technical definition present, the search division could not establish a technical problem addressed in order to be able to carry out a meaningful search into the state of the art (Rule 45 EPC). See also Guidelines Part B Chapter VIII. Accordingly no search has been carried out. It should be noted that a search for prior art will be performed if, during any subsequent examination procedure, the applicant should succeed in arguing or amending the application such that the examining division considers such a search is necessary for the assessment of patentability.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br><br>----- | |

| Place of search | Date | Examiner |
|---|---|---|
| The Hague | 18 November 2005 | Moynihan, M |

EPO FORM 1504 (P04C37)